# EUROPEAN PATENT APPLICATION

(11) **EP 1 256 750 A1**
(43) Date of publication of application: **13.11.2002**
(21) Application number: 00904037.9
(22) Date of filing: 18.02.2000
(51) Int. Cl.: F16K 31/04, F16K 27/02

(54) **MOTOR TYPE FLOW CONTROL VALVE AND METHOD OF MANUFACTURING THE FLOW CONTROL VALVE**

(71) Applicant: Hitachi, Ltd., Chiyoda-ku, Tokyo 101-8010 (JP); Hitachi Car Engineering Co., Ltd., Hitachinaka-shi, Ibaraki 312-0062 (JP)
(72) Inventor: Watanabe, Youichi, Hitachinaka-shi Ibaraki 312-0062 (JP); Suganami, Masayuki Hitachi, Ltd., Hitachinaka-shi Ibaraki 312-0062 (JP); Nakano, Yasuyuki Hitachi, Ltd., Hitachinaka-shi Ibaraki 312-0062 (JP); Tsubouchi, Haruyoshi Hitachi, Ltd., Hitachinaka-shi Ibaraki 312-0062 (JP)
(74) Representative: Beetz & Partner Patentanwälte
(86) International application number: JP0000934
(87) International publication number: WO01061225

(57) **Abstract**

Form a single unit by use of a motor that is internally mounted within an outer-facing or sheath resin, a mechanism for conversion of the motor's rotation into linear straight movement of an actuator rod, a bearing for support of a rotor of the motor, and a bearing guide. The unit is then attached to one terminate end of a valve body, causing the rod to be coupled to a valve rod . The bearing guide (good thermal conduction member) comes into contact with stator parts of the motor, thus coming into contact with the of the valve body's inner periphery directly or indirectly via the good thermal conduction member. The valve element and the valve rod are separately machined components and are tightly attached by welding or the like after having performed position adjustment by gap fit techniques.

With such an arrangement, it is possible to readily define relative initial positions of the actuator rod and valve body of a motor-driven flow rate control valve while additionally increasing the motor's heat releasability to thereby enable improvements in performance of the flow rate control valve and further making it possible to make an apparatus more compact and also simplify the assembly property thereof.

## Description

### BACKGROUND OF THE INVENTION

### (Field of the Invention)

The present invention relates to flow rate control valves and also relates to a motor-driven flow rate control valve adaptable for use as an electronically controllable EGR (exhaust gas reflux) valve or ISC (idle speed control) valve or the like of internal combustion engines along with its manufacturing method and an actuator unit.

### (Prior Art)

Traditionally, in electronically controllable EGR valves or else for example, motor-driven flow rate control valves are known which convert rotational motion of a motor into linear motion of an actuator rod through a screw mechanism and then transfer this linear motion toward a valve rod (also called the "valve shaft" in some cases) to thereby control the open degree of a valve, as disclosed in Japanese Application Patent Laid-Open Publication Nos. Hei 4-276166 and 10-82349.

Motors for use with the valves of this type include stepping motors and DC motors or the like.

A valve element and a valve rod used therein are typically machined integrally, wherein flow amount adjustment during valve assembly processes has been performed in a way which follows.

After having assembled several parts or components such as a motor, actuator rod, valve rod (with valve element added thereto) and others into a valve body, let the motor rotate by a predetermined step degree from a zero point to thereby shift the actuator rod and then the valve element by a prespecified amount; then, at this position, perform forward/backward movement adjustment of a sheet member (valve sheet) of the screw-in type. Thereafter, when it becomes a specified gas flow amount, weld the sheet member to the valve body's inner periphery.

### SUMMARY OF THE INVENTION

### (Problems to be solved by the Invention)

An object of the present invention is to provide a motor-driven flow rate control valve and a manufacturing method thereof, the valve being capable of substantially attaining the required flow amount adjustment by, in place of prior art flow amount adjustment schemes, readily defining relative initial positions of an actuator rod and a valve element in the valve full-open state.

Additionally in cases where a sheet member is attached by screw-in techniques as in the prior art, fluid leakage can occur from its screw surfaces; thus, a care should be taken such as letting the screw surfaces be filled with sealing agent or the like. With the present invention, it also lies in provision of a motor-driven flow rate control valve without requiring such troublesome and time-consuming works while eliminating any risks as to occurrence of the above-noted fluid leakage.

In addition, it is to provide a motor-driven flow rate control valve capable of increasing the heat releasability of a motor to thereby achieve improvements in flow rate value performance while at the same time making an apparatus more compact and also realizing simplification of assembly and the like.

### (Means for Solving the Problems)

To attain the foregoing objects, the present invention principally provides the means bellow.
(1) Firstly, in order to define the relative initial positions of an actuator rod and a valve element, the following manufacturing method is provided.
   More specifically, in a manufacturing method of a motor-driven flow rate control valve which is for converting rotational motion of a step motor into linear motion of an actuator rod through a screw mechanism and for controlling a valve open degree by this linear motion, characterized in that
   the valve rod and a valve element are machined separately, and at a step of attaching said valve element to said valve rod said step motor and the actuator rod along with the valve rod and a return spring are assembled in advance into a valve body for enabling said valve rod to offer movement controllability by rotation of said step motor, and
   said step motor causes said actuator rod to move by a prespecified step amount to thereby let one end of the actuator rod and one end of said valve rod come into contact together, and in this state performs gap fitting to cause said valve element to be in contact with a valve sheet, and thereafter tightly attach the valve element.
   In relation thereto, the following motor-drive flow rate control valve is proposed.
   A motor-driven flow rate control valve for conversion of rotational motion of a motor into linear motion in accordance with a rotation amount to thereby control a valve open degree by this linear motion, characterized in that
   a valve rod and a valve element are formed of separate machined components and that said valve element is tightly attached to a distal end of said valve rod after having subjected to gap fitting.
   Examples of the tight attachment means of the valve element include welding, caulking and adhesion and others.
(2) In order to increase the heat releasability of the motor and thus improve the performance of the flow rate control valve, the following problem solving means is proposed.

A motor-driven flow rate control valve, characterized in that
a motor is attached to one end of a valve body for driving a valve element,
said motor is internally mounted in an outer-facing resin, a rotor of the motor is supported by a bearing and said bearing is received by a bearing guide,
said bearing guide is constituted from a good heat conduction member, and said bearing guide is arranged to become a heat release path for permitting heat of a coil portion of said motor to escape toward said valve body side with more than one cooling pipe.

In addition, in order to let it satisfy the readiness of assembly characteristics and the above-stated heat releasability, the following problem solving means is proposed.

A motor-driven flow rate control valve, characterized in that a motor being internally mounted in an outer-facing resin and a motion conversion mechanism for converting rotational motion of the motor into linear motion of an actuator rod along with a bearing for support of a rotor of said motor and a bearing guide for receiving the bearing therein are formed as a single assembly structure (this assembly structure will be referred to as an "actuator unit" hereinafter),
said actuator unit is attached to one end of a valve body with its actuator rod being disposed to transfer a valve-opening force toward a valve rod as internally mounted in the valve body, and
said bearing guide is comprised of a good heat conduction member, wherein this bearing guide is in contact with stator parts of said motor and is contacted with an inner periphery of the valve body directly or alternatively indirectly via the good heat conduction material.

Details of them will be set forth below.

### BRIEF DESCRIPTION OF THE DRAWINGS

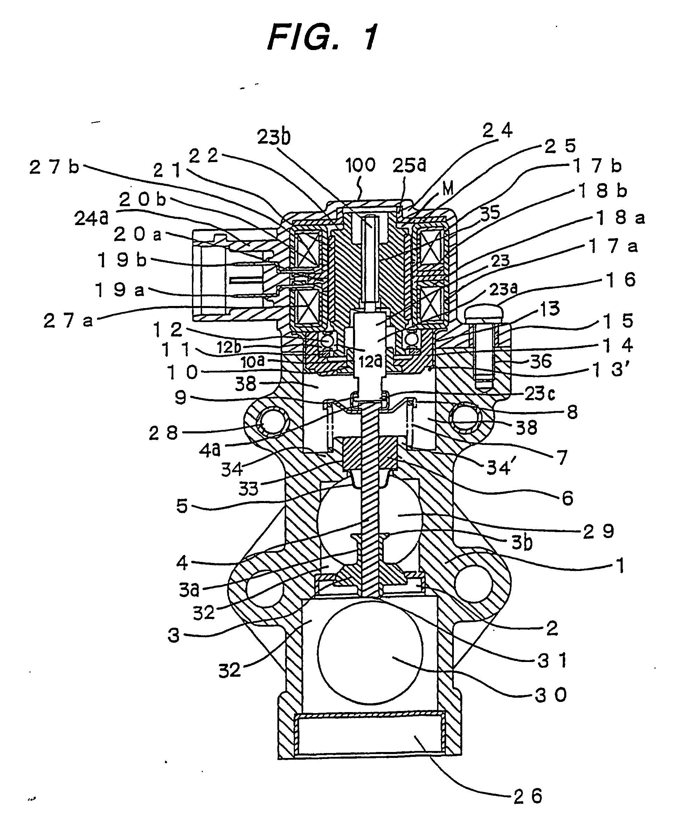

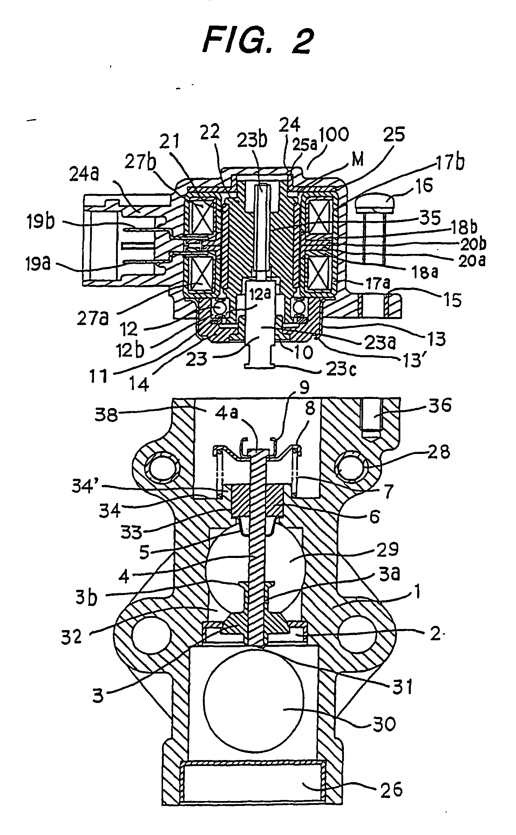

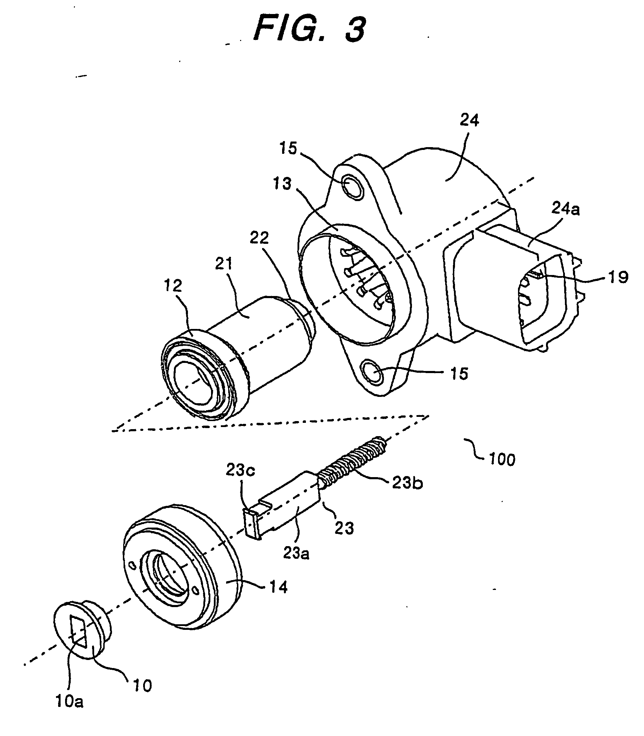

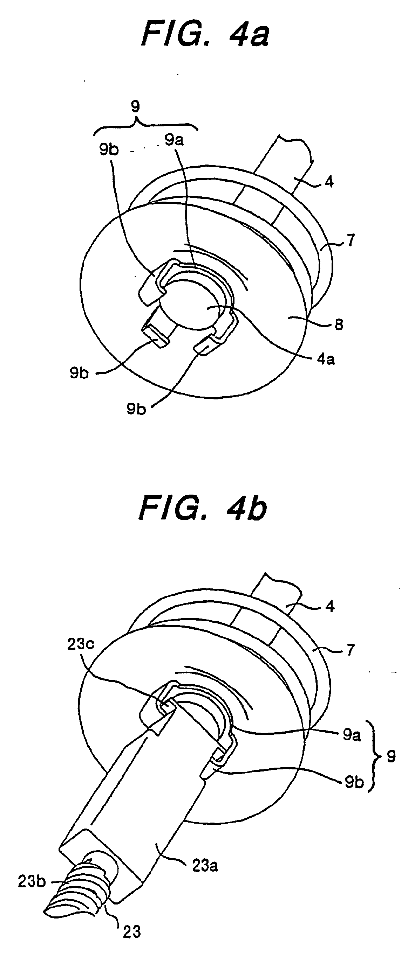

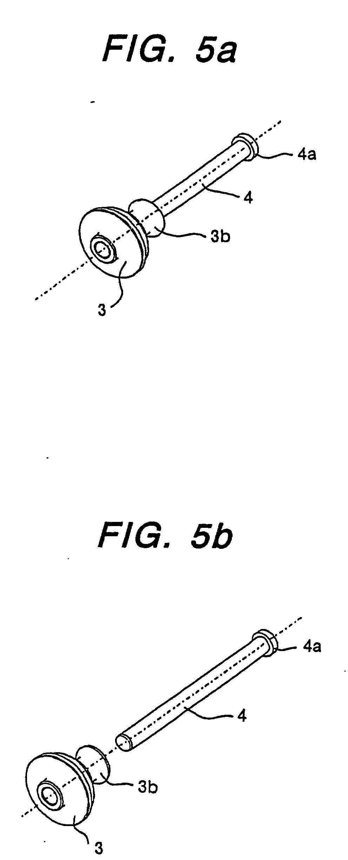

Fig. 1 is a diagram showing a longitudinal cross-sectional view of a motor-driven flow rate control valve in accordance with one preferred embodiment of the present invention, Fig. 2 is a longitudinal sectional diagram showing the state that an actuator unit and a valve body of the motor-driven flow rate control valve are cut away, Fig. 3 is an exploded perspective diagram of the actuator unit, a portion (a) of Fig. 4 is a partially enlarged perspective diagram showing the state that a return spring 7 and a spring-receiving plate 8 plus a joint 9 for coupling an actuator rod are mounted together at a valve rod 4 used in this embodiment, (b) is a partly enlarged perspective diagram showing the state that the valve rod 4 and an actuator rod 23 are coupled together, (a) of Fig. 5 is a perspective diagram showing the state that the valve rod and valve element are integrated together, and (b) is a perspective diagram with the valve rod and the valve element disassembled.

### DETAILED DESCRIPTION OF THE PREFERRED EMBODIMENTS

One preferred embodiment of the present invention will now be explained by using the accompanying drawings.

A motor-driven flow rate control valve of this embodiment is for example the one that is for use as an EGR (exhaust gas reflux) valve in internal combustion engines. Generally as shown in Fig. 2, it is constituted from a valve body 1 and an actuator unit 100.

The valve body 1 has an exhaust gas inlet port 30 for introduction of exhaust gases from an exhaust pipe (not shown) of an internal combustion engine and an exhaust gas outlet port 29 for permitting a back flow of exhaust gases to an intake manifold system, wherein a flow path 32 between said inlet port 30 and outlet port 29 is formed within the body 1. In this example the inlet port 30 and the outlet port 29 plus the flow path 32 form a "U"-shaped gas flow path. Material of the body 1 is a member which is excellent in heat conductivity-for example, aluminum or cast iron or the like.

Attached to the flow path 32 of the valve body 1 is a seat member 2 which has an orifice. Although this attachment is of the screw-in type, others may also be used, including press fitting, welding, adhesion and the like.

One end of the valve body is blocked by a plug 26. In addition, the flow path 32 and a space 38 are formed in the valve body 1 with a partition wall 34 laid therebetween.

The space 38 is the one that becomes a coupling chamber of a valve rod 4 and an actuator rod 23, and also becomes a component enclosure chamber for receiving therein certain components such as a return spring 7, spring-receiving plate 8, joint 9 and others. Further, it functions as a space for insertion of a bearing guide 14 of the actuator unit 100 as will be later described.

A through-going hole 33 is formed in the partition wall 34 for permitting penetration of the valve rod 4. A valve guide 6 which guides linear motion (reciprocal motion) of the valve rod 4 is press-fit and fixed in this through hole 33, wherein this press-fit fixation allows retention of air-tight environment of the valve guide portion 6. Formed around the through hole 33 is a boss portion 34' which is used to attach a spring for engagement of one end of the return spring 7.

The valve rod 4 and a valve element 3 are the ones that are formed separately of each other, wherein the valve element 3 is tightly attached and fixed by welding to an end of the valve rod 4 after completion of gap fitting.

The valve rod 4 and the valve element 3 are constituted from stainless-based members such as for example SUS304 in view of machinability, corrosion resistance and thermal resistance. The valve guide 6 is made of SUS-based sinter metals.

The valve rod 4 is slidably supported by the valve guide 6. A dust cover 5 is a taper-like shape and covers the valve guide 6 and a valve rod portion in close proximity thereto for prevention of any unwanted attachment of contaminants, such as carbon and/or oil components as contained in exhaust gases, to a gap of the outer periphery of valve rod 4 and the valve guide 6. This dust cover 5 has its one end periphery which is held between the valve guide 6 and a guide receiver within the valve body 1.

A latch portion 4a that is made larger in diameter than the valve rod 4 is formed at one end (one end on the opposite side to the valve element 3) of the valve rod 4 (although it has a disk-like shape here, the shape may be freely designed), wherein the joint 9 and the spring-receiving plate 8 are loosely and movably mounted (clearance fit) to the valve rod 4 in such a manner that these are engaged at this latch portion 4a. The plate 8 is the one that becomes a spring receiver of the return spring 7, and is being engaged at the latch portion 4a while receiving the spring force of the return spring 7 that resides between the plate 8 and partition wall 34. The force of such return spring 7 activates the valve rod 4 via the plate 8 and latch portion 4a in a specific direction that pulls up it (valve closure direction).

As shown in Fig. 4(a), the joint 9 is formed by integrally machining an annular portion 9 which is loosely fit to the valve rod 4 and three hook portions 9b that are disposed at the outer periphery of the annular portion 9 with 90° intervals. The joint 9 is such that its annular portion 9 is situated between the latch portion 4a and the plate 8. With respect to such joint 9, as shown in Fig. 4(b), latch portions 23c as provided at a distal end of the actuator rod 23 to be later described (the latch portions 23c are disposed at 180° intervals) enter between hook portions 9b from the spaces as defined with 180° intervals of between the hook portions 9b. With such an structure, when the actuator rod 23 performs a backward operation (moving operation toward the upward direction of Fig. 1), the annular portion 9a of the joint 9 is fixed and engaged at the latch portion 4a on the valve rod side, and then the hook portion 9b is engaged at the latch portion 23c of the actuator rod 23; at this time, the valve rod 4 and actuator rod 23 become in the coupled state.

The valve element 3 is of the push-open scheme type, wherein it opens whenever the valve rod 4 is pushed against the force of the return spring 7.

The valve element 3 exhibits an umbrella-like shape, wherein a sleeve (cylindrical portion) 3a is formed on its one end side whereas a flange 3b is provided at one end of this sleeve 3a for changing the direction of a flow of exhaust gas passing through a space between the valve element 3 and sheet member 2 (orifice). These flange 3b and sleeve 3a plus valve element 3 are machined into an integral unit.

The sleeve 3a and flange 3b are disposed so that these are placed in a downstream side flow path of the sheet member 2. It is under consideration that changing a flow of exhaust gas by the flange 3b maximally prevents attachment of dust components (such as carbon, oil components and the like) of the exhaust gas between the dust cover 5 and valve rod 4 and also between the valve rod 4 and valve guide 6, thereby maximally avoiding occurrence of any possible delay in operation of the valve rod 4.

The flange 3b is the one that can be formed integrally with the valve element 3 due to provision of the sleeve 3a therebetween; with this arrangement, it is no longer necessary to process and machine any flange on the valve rod side as in the prior art, which in turn makes it possible to reduce production costs of components. In addition, prior to attachment of the valve element 3 to the valve rod 4, it is possible to permit the valve rod 4's outer periphery to have a straight surface shape with no flanges. Accordingly, it is possible to insert the valve rod 4 into the valve guide 6 from the flow-path outside space 38 side, thereby making it possible to increase assembly designs in the degree of freedom. For example, the ability to insert the valve rod 4 from the actuator attachment side toward the flow path 32 enables the latch portion 4a that is made larger in diameter than the valve rod 4 to be provided at one end of the valve rod 4 on the opposite side to the valve element attachment side; thus, it is possible to fasten the spring receiving plate 8 and/or joint 9 to this latch portion 4a by using only the spring force of the return spring 7. As a result, the plate 8 and joint 9 may be permitted to experience the gap fitting only while avoiding a need to tightly attach them to the valve rod by caulking techniques or else, which in turn makes it possible to achieve simplification and cost reduction of the assembly works required.

Reference numeral 28 is a cooling pipe as formed within the valve body 1, which makes up reflux water flow path for introduction of engine cooling water by way of example, wherein the cooling pipe 28 is connected to a water jacket of the engine through a pipe outside the valve body, not shown.

The actuator unit 100 is an ensemble of at least the following components which are assembled together into a single module. More specifically, it was formed as a single assembly structure (unit or module) of an outer-facing or "sheath" resin (resin mold) 24 that is machined integrally with a connector case 24a, a motor unit M as internally mounted within the sheath resin 24, a motion conversion mechanism (in this example, a screw mechanism) for converting rotary motion of this motor into reciprocal motion of the actuator rod 23, a bearing 12 which supports a rotor (magnet holder) 22 of the motor M, and a bearing guide 14 for receiving the bearing 12 therein.

In this embodiment, a stepping motor is used as the motor unit M, wherein the rotor is a rotor of the magnet shape with a permanent magnet 21 being provided and disposed at the outer periphery of the magnet holder 22 that is made of synthetic resin and also with a female screw 35 for use as an element of the above-noted motion conversion mechanism being provided at a central portion thereof.

The actuator rod 23 is formed of an integrally machined structure which consists of at least a rotation-prevent or whirl-stop element (in this example, this is formed into a rectangular shape as shown in Figs. 3, 4) having a flat surface portion that is formed on one plane of the outer periphery and a male screw 23b, which may be made of machinability-excellent materials such as for example SUS303. The whirl-stop element 23a is inserted into a bush 10 that is fixed to the actuator unit 100. The bush 10 is such that its through-going hole 10a exhibits a rectangular hole shape adaptable for engagement with the shape of the whirl-stop element 23, wherein the whirl-stop element 23 is fit into and engaged with this hole 10a to thereby establish preclusion of rotation of the actuator rod 23.

The bush 10 is made for example of Cu-based sintered material and is tightly attached by either press-fit or compressive clamp techniques to the central portion of the bearing guide 14 and thus is integrated together with the bearing guide 14.

The male screw portion 23b is screwed and mated with the female screw 35 that is provided in the magnet holder 22 in such a manner that upon rotation of the magnet holder 22, the actuator rod 23 performs a linear motion via the above-noted screw mechanism.

Axially divided motor coils 27a, 27b are wound around respective bobbins 18a, 18b, wherein a stator unit is constituted by letting stator parts (yokes) 17a, 17b, 20a, 20b cover these bobbins and motor coils.

A magnetic field or fields is/are created by electrical conduction to the coils 27a, 27b through terminals 19a and 19b.

Disposed at one end inner wall of the sheath resin 24 is an upper plate 25 made of metal, which has a shaft bearing function for holding one end of the magnet holder (rotor) 22.

The sheath resin 24 is molded by PPS (polyphenylene sulfide) by way of example, wherein the stator unit including the motor coils 27a, 27b, the upper plate 25, the terminal 19a, 19b and the guide holder 13 is integrated with resin 24 by molding resin (insert molding).

The guide holder 13 is the one that holds the bearing guide 14 by caulking one end 13' of the bearing holder 13 after insertion of bearing guide 14, wherein prior to built-in assembly of the guide 14, the one end 13' exhibits a straight shape in order to permit penetration of the guide 14 as shown in Fig. 3.

On the other hand, at the magnet holder 22 making up the rotor portion, the permanent magnet 21 and the ball bearing 12 are integrated together through an insert-molding process (see Fig. 3).

The actuator unit 100 has been formulated into a unit prior to attachment to the valve body 1, and is assembled in a way which follows.

Insert the rotor portion into inside of the stator-side coils 27a, 27b (at this time, one end of the magnet holder 22 is fit into and engaged with a bearing hole 25a of the upper plate 25); next, as shown in Fig. 3, after having screw-fit the male screw portion 23b of the actuator rod 23 into the female screw 35 of magnet holder 22, insert the bearing guide 14 with the bush 10 attached thereto into inside of the guide holder 13 and then caulk the guide holder one end 13'. In this way, the actuator unit 100 is thus constituted, which consists essentially of an integrated assembly of the sheath resin 24, the connector case 24a, the motor unit M (including the ball bearing 12), the terminals 19a, 19b and the bearing guide 14.

PPS is used as the resin material of the magnet holder 22. Letting PPS contain Teflon makes slidability higher. In place of PPS, either PBT (polybutylene terphthalate resin) or PA (polyamide resin) or the like may also be used.

By insert-molding of the rotor portion's constituent components (magnet, ball bearing) into the magnet holder 22, it is possible to delete a magnet adhesion process and a ball bearing press-fit process, thus enabling reduction of the requisite number of assembly process steps. It is also possible to improve the coaxial degree of the magnet 21 and ball bearing 12.

In the actuator unit 100, the ball bearing 12 is such that its inner ring 12a side is insert-molding to the magnet holder 22 with a wave washer 11 being inserted between one end of an outer ring 12b and an inner bottom of the guide holder 14. Owing to this wave washer 11, the outer ring 12b is given a certain pressure in such a manner as to be in compressive contact with the stator parts 17a of the motor unit to thereby guarantee establishment of smooth shaft bearing functionality. Very importantly, in this example, the ball bearing for rotatably supporting the rotor portion is a single component while specifically designing in a way such that upper and lower portions of the outer ring 12a of this ball bearing 12 are fixable by the spring force of wave washer 11; accordingly, it is designed so that no previous given pressures are applied to balls of the ball bearing 12, which in turn makes it possible to lessen any possible start-up frictional torque upon rotation of the rotor portion, thus enabling prevention of decrease in generation torque of the motor.

Assembly of a flow rate control valve is performed by attaching the previously unitized actuator unit 100 to the valve body 1. In such case, it is done by coupling the actuator rod 23 to the valve rod 4 within the space 38 via the joint 9 in the way stated supra, performing position alignment of a plurality of bushes 15 as provided at the sheath resin 24 and more than one screw hole 34 on the valve body 1 side, and then clamping the screw 16.

The bearing guide 14 is formed of a good heat conduction member (e.g., A2017), wherein this bearing guide 14 is arranged in such a way as to become a heat release route or path for permitting escape of heat of the motor's coil portions 27a, 27b toward the valve body 1 side. An actual example of this heat release path is as follows.

The bearing guide 14 is such that one end is brought into contact with part of the stator parts (e.g. yoke) 17a and that upon attachment of the actuator unit 100 to the valve body 1, part of such guide 14 behaves to enter the space 38 on the body 1 side, resulting in indirect contact with the valve body 1 made of aluminum. Consequently any generated heat of the motor coil 27 is transferred toward the valve body 1 through the stator parts 17a, bearing guide 14 and guide holder 17; further, this heat will be absorbed by coolant water passing along a cooling passage 28.

Thus it is possible to prevent thermal performance degradation of the motor, thereby making it possible to improve the output performance of the motor flow rate control valve. It should be noted here that the bearing guide 14 may be modified so that it comes into direct contact with the valve body 1 for formation of the intended heat release path.

An operation of the flow rate control valve thus arranged is as follows.

Let more than one pulse signal as supplied from the terminals 19a, 19b be electrically fed to the coils 27a, 27b, causing the rotor portion 22 of the motor unit M to rotate in a step-like fashion. Rotary motion of the rotor portion 22 is converted, by actions of the male screw 35 being provided at the rotor portion and the actuator rod 23 plus the female screw 23a, into straight or linear motion (reciprocal motion) of the actuator rod 23, wherein this force is transferred to the valve rod 4 to thereby push-open the valve element 3 in a way against the return spring 7. Depending upon a movement amount of the actuator rod 23, the amount of a gap between the valve element 3 and the sheet member 2 changes, thus enabling an exhaust gas flowing from the inlet port 30 toward the outlet port 29 to change in flow rate accordingly.

It must be noted that although the return spring 7 is the one that gives a force for letting the valve rod 4 keep track of the actuator rod 23 when the actuator rod 23 performs its return operation due to motor control, it is possible for this embodiment to avoid any possible operation problems otherwise occurring due to stagnation of the valve rod 4 because of the fact that this embodiment is specifically arranged so that even in cases where stagnation of more than the spring force occurs at the valve rod 4, the actuator rod 23 serves to forcibly pull and raise the valve rod 4 via hook latch of the joint 9 by a drive force of the motor.

In the case of manufacturing the motor-driven flow rate control valve of this embodiment, first assemble the valve guide 6 and dust cover 5 into inside of the valve body 1 while letting the valve rod 4 (note here that it is in the state that the valve rod 4 is not yet attached thereto) along with its associative components such as the return spring 7, plate 8, joint 9 and others be assembled together.

It is the one that assembles into the valve body 1 arranged in the way stated above the actuator unit 100 which comprises the step motor M and the actuator rod 23 and the like, and then connects the actuator rod 23 and the valve rod 4 together via the joint 9 within the valve body 1, and thereafter attaches the valve element 3 to the valve rod 4 at a final process step.

The attachment of this valve element 3 is such that movement control of the actuator rod 23 is enabled in advance by rotation of the step motor M. Additionally, since a vacant gap of predetermined steps (e.g. five steps) is previously reserved between one end of the actuator rod 23 and one end of the valve rod 4 within the joint 9 when the actuator rod 23 is present at a zero point position (initial position, which is a position corresponding to zero step pulse) for use as a reference position for execution of the intended control, let the step motor M be pulse-driven by this predetermined step amount, thereby causing the actuator rod 23's one end and the valve rod 4's one end to come into contact with each other.

In this embodiment, when the actuator rod 23 is in such the positional relationship, let the valve element 3 be gap-fit to the valve rod 4 to thereby perform adjustment for causing the valve element 3 to come into contact with the sheet member 2-in this state, effectuate tight attachment of the valve element 3 by spot welding 31 or the like for example.

With such an construction, as the positional relationship of the valve element 3 and the actuator rod 23 at the time that the valve open degree is zero is defined uniformly, it is possible to attain the intended flow rate adjustment even in the absence of any substantial gas flow, by employing the scheme for readily defining the relative initial positions of the actuator rod and the valve element while the valve is fully closed in place of the prior art schemes for performing flow rate adjustment through sheet member position adjustment.

It should be noted that as has been described above, the reservation of the gap of specified steps in advance between one end of the actuator rod 23 and one end of the valve rod 4 within the joint 9 at the time of the initial state is in order to absorb a discrepancy between a zero point used for the motor control and the valve's mechanical zero point (full close point).

In accordance with the embodiment as disclosed herein, as has been described above, it is possible to improve the heat releasability of the actuator unit that is covered by the outer-facing (sheath resin) 24 and then prevent reduction of motor output performance and further possible to simplify assembly and flow rate adjustment.

It should also be noted that since the support structure of the rotor 22 of this scheme is a 1-ball-bearing + plane metal structure, it is possible to permit use of a single ball bearing while at the same time permitting use of only one inner ring of such bearing to be integrated with the rotor 22. Due to this, it becomes possible to lighten the rotor weight including the inner ring in comparison with rotor support schemes using two separate ball bearings; thus, there is an advantage of enabling the rotor to get smaller in moment of inertia while enabling preclusion of out-of-adjustment in stepping motor-based flow rate control valves.

Although in the above embodiment the EGR valve is shown as one example, the present invention should not exclusively be limited thereto and may alternatively be applicable to other use applications including but not limited to ISC valves and the like: in addition, regarding the motor, it will also be possible to employ a DC motor in place of the step motor.

### (Effects of the Invention)

As has been stated in detail in the embodiment of the invention, in accordance with the present invention, it offers effects which follow.

With the problem-solving means of (1), readily defining the relative initial positions of the actuator rod and the valve body in a valve full-closure state as an alternative to the prior known flow rate adjustment schemes makes it possible to substantially achieve the flow rate adjustment. In addition, unlike the prior art valve sheets of the type using screw-in schemes, it is no longer necessary to coat any sealing agent on screw planes, which in turn enables simplification of assembly processes.

With the problem-solving means of (2), it is possible to increase the heat releasability of the motor to thereby attain improvements in performance of the flow rate control valve. Further, it is possible to realize integration and compactness of components of the motor-driven flow rate control valve while attaining simplification of the assembly properties thereof.

## Claims

1. A motor-driven flow rate control valve for conversion of rotational motion of a motor into linear motion in accordance with a rotation amount to thereby control a valve open degree by this linear motion,
**characterized in that** a valve rod and a valve element are formed of separate machined components and that said valve element is tightly attached to an end of said valve rod after having subjected to gap fitting.

2. A motor-driven flow rate control valve for conversion of rotational motion of a motor into linear motion in accordance with a rotation amount to thereby control a valve open degree by this linear motion,
**characterized in that** a valve rod and a valve element are formed of separate machined components and that said valve element is tightly attached to an end of said valve rod after having subjected to gap fitting,
one end of said valve rod on the opposite side to the side with said valve element attached thereto is projected toward outside of a flow path, wherein a latch portion with its diameter made larger than the valve rod is provided at this one end, and wherein a plate for receiving a return spring of said valve element is engaged by its spring force at this latch portion.

3. The motor-driven flow rate control valve as recited in claim 2, wherein the rotational motion of said motor is converted into linear motion of an actuator rod through a screw mechanism, wherein a latch portion with its diameter made larger than the actuator rod is also provided at an end of the actuator rod, and wherein a joint lies between the actuator rod and the valve rod for being engaged at both the latch portions of the actuator rod and the valve rod when the actuator rod performs a backward operation.

4. The motor-driven flow rate control valve as recited in claim 1 or 2, wherein said valve element is tightly attached to the end of said valve rod by using any one of welding, caulking and adhesion.

5. The motor-driven flow rate control valve as recited in claim 1 or 2, wherein a flange for changing the direction of a flow of fluid passing through between the valve element and a sheet is machined integrally in said valve element.

6. A motor-driven flow rate control valve,
**characterized in that**
a motor is attached to one end of a valve body for driving a valve element,
said motor is internally mounted in an outer-facing resin, a rotor of the motor is supported by a bearing , and said bearing is received by a bearing guide,
said bearing guide is constituted from a good heat conduction member, and said bearing guide is arranged to become a heat release path for permitting heat of a coil portion of said motor to escape toward said valve body side with more than one cooling pipe.

7. A motor-driven flow rate control valve,
**characterized in that** a motor being internally mounted in an outer-facing resin and a motion conversion mechanism for converting rotational motion of the motor into linear motion of an actuator rod along with a bearing for support of a rotor of said motor and a bearing guide for receiving the bearing therein are formed as a single assembly structure (this assembly structure will be referred to as an "actuator unit" hereinafter),
said actuator unit is attached to one end of a valve body with its actuator rod being disposed to transfer a valve-opening force toward a valve rod as internally mounted in the valve body, and
said bearing guide is comprised of a good heat conduction member, wherein this bearing guide is in contact with stator parts of said motor and is contacted with an inner periphery of the valve body directly or alternatively indirectly via the good heat conduction material.

8. The motor-driven flow rate control valve as recited in claim 7, wherein said rotor is a magnet type rotor with a permanent magnet being disposed at the outer periphery of a magnet holder made of synthetic resin, a female screw for use as an element of said motion conversion mechanism is provided at a central portion thereof, said actuator rod is such that a male screw being provided at the outer periphery with constraint of its movement in a rotation direction is screw-mated with said female screw,
said permanent magnet and said bearing are integrated with said magnet holder resin by molding the magnet holder,
said rotor is inserted into inside of a motor coil while permitting said bearing guide to be held at a guide holder of the good heat conduction member as provided in said outer-facing resin, and
at least a part of said bearing guide is heat-conductably fit via said guide holder to the inner periphery at said valve body.

9. A manufacturing method of a motor-driven flow rate control valve for converting rotational motion of a step motor into liner motion of an actuator rod through a screw mechanism and for transmitting this linear motion toward a valve rod to thereby control a valve open degree,
**characterized in that**
said valve rod and a valve element are machined separately, and at a step of attaching said valve element to said valve rod , said step motor and the actuator rod plus the valve rod and a return spring are assembled in advance into a valve body for enabling said valve rod to offer movement controllability by rotation of said step motor, and
said step motor causes said actuator rod to move by a prespecified step amount to thereby let one end of the actuator rod and one end of said valve rod come into contact together, and in this state performs gap fitting to cause said valve element to be in contact with a valve sheet, and thereafter tightly attach the valve element.

10. An actuator unit **characterized in that** a motor being internally mounted in outer-facing resin and a motion conversion mechanism for converting rotational motion of the motor into linear motion of an actuator rod along with a bearing for support of a rotor of said motor and a bearing guide for receiving said bearing are formed as a single assembly structure.

11. The actuator unit as recited in claim 10,
**characterized in that** said bearing guide is comprised of a good heat conduction member and that this bearing guide is in contact with stator parts of said motor.
